# EUROPEAN PATENT SPECIFICATION

(11) **EP 2 639 450 B1**
(45) Date of publication and mention of the grant of the patent: **18.05.2016**
(21) Application number: 12382088.8
(22) Date of filing: 13.03.2012
(51) Int. Cl.: F03D 80/00

(54) **Air conditioning system for a wind turbine and method for ventilating and pressurizing a wind turbine**
Klimaanlagensystem für eine Windturbine und Verfahren zum Lüften und unter Druck setzen einer Windturbine
Système de conditionnement d'air pour éolienne et procédé de ventilation et de mise en pression d'une éolienne

(43) Date of publication of application: 18.09.2013
(73) Proprietor: ALSTOM Renewables Technologies Wind B.V., 2983 GS Ridderkerk (NL)
(72) Inventor: Bescos, Javier, 08006 Barcelona (ES)
(74) Representative: ZBM Patents - Zea, Barlocci & Markvardsen

(56) References cited:
- EP-A1- 2 154 364
- EP-A2- 1 736 665
- WO-A1-2006/032515
- WO-A1-2011/091863
- DE-A1-102008 053 814
- DE-C1- 19 859 628
- US-A1- 2010 164 228
- US-A1- 2011 204 652

## Description

The present invention relates to air conditioning systems for wind turbines and further relates to methods for ventilating and pressurizing a wind turbine.

### BACKGROUND ART

In modern wind turbines, HVAC (Heating Ventilation & Air Conditioning) systems may be arranged to protect the internal components from external environmental hazards. The aim of these systems may be to control the temperature and humidity inside the turbine, and/or the prevention of water droplets, salt or dust inside the turbine. This may be particularly important when wind turbines are used in harsh environments, such as e.g. in an offshore wind park. In some implementations, such as e.g. in the desert, the humidity control may not be needed.

HVAC systems may be able to operate at different environmental and turbine power production conditions. At these different conditions, the system may have to fulfill different requirements, e.g. while overheating prevention requires a high rate ventilation flow, humidity control and dust intake prevention can only be done, in a cost-effective manner, with a lower air renewal rate. In order to control parameters such as the pressurization level within the wind turbine and/or the ventilation flow rate, control strategies may take into account factors such as the type of control or prevention that is required and the type of housing used in the wind turbine (e.g. substantially sealed or permeable). It is important to take this kind of factors into account in order to obtain a HVAC system with optimized power consumption, which is able to provide a suitable pressurization level within the wind turbine and which minimizes damages in the housing of the wind turbine.

In conventional HVAC systems, a minimum pressurization level within the wind turbine may be required in order to avoid uncontrolled inward air flow through the housing joints of the wind turbine. Thanks to continuous pressurization, water droplets, salt and/or dust intake may be prevented. Additionally, when the turbine is operating and cooling is needed, the system may be able to guarantee a minimum flow rate that is required in order to avoid excessive high temperatures in the wind turbine. In this respect, achieving this minimum flow rate may considerably increase the pressurization level within the wind turbine. This fact may lead to damage at housing joints and it may also require high energy consumption. It may also lead to premature wear of the ventilation system involved.

The document DE102008053814 discloses a method and apparatus for air treatment in offshore wind turbines with a tower at the upper end of a cable to a generator and at least one rotor blade and into the interior of heat-emitting electrical and electronic units such as switchgear, switchgear, transformers, and the like are arranged in an assembly module 15 of the tower and which has at least one air inlet opening and air outlet apertures.

The document WO2011091863 discloses a method and a device for treating interior air, extracted air AbL from an interior, outside air AL or a mixture of extracted air and outside air is fed to a dehumidifying sector of an adsorption rotor and dry or dried incoming air ZL is discharged from the dehumidifying sector to the interior. Humid, salty outside air AL is sucked in from the surroundings of the interior via an air inlet opening as regeneration air and conducted via a first flow path of a regeneration-air heat exchanger with first and second flow paths that are hermetically separate from each other and in heat-exchanging communication with each other, and takes up thermal energy from an outgoing air stream or incoming air stream, which is conducted via the second flow path of the regeneration-air heat exchanger. The moisture taken up in the dehumidifying sector of the adsorption rotor is taken up in a regenerating sector of the adsorption rotor and discharged as moist outgoing air FL via an air outlet opening to the surroundings of the interior.

The document DE19859628 discloses a device where the air is drawn from the downwind side into the tower and passed through a pipe into a chamber where most of the moisture is deposited. The air is passed through a filter to a compressor into the generator and gear housing. The filter is a vortex chamber in which the remaining moisture is removed by centrifugal action. The air in the housing is passed out through gaps. Pressure sensors in the housing monitor the effectiveness of the operation.

### SUMMARY OF THE INVENTION

In a first aspect, the invention provides an air conditioning system for a wind turbine comprising at least one adjustable air intake, one adjustable air exhaust and a variable air flow generator, wherein the adjustable air exhaust may be adapted to maintain the pressurization level in the wind turbine within a predetermined range.

An adjustable air exhaust within the wind turbine may be used to maintain the pressurization level within the wind turbine within a predetermined range of pressurization values. The variable flow generator may adapt the flow of (cooling) air within the wind turbine in accordance with circumstances: a minimum flow rate may be provided at all times to make sure dust, and water droplets, etc. do not enter the wind turbine. When overheating can become a problem, a higher flow rate may be provided than when overheating is not a potential problem. At the same time, the adjustable air exhaust can ensure that the pressure within the wind turbine stays under control. Advantages of using this adjustable air exhaust in air conditioning systems for wind turbines may be the reduction of energy consumption and keeping the pressurization level in an acceptable range so that damage at the housing joints may be substantially reduced or avoided.

In some embodiments of the invention, the variable air flow generator may comprise a low rate fan and a high rate fan. The low rate fan may be used for obtaining a pressurization level within the wind turbine above the minimum pressurization level required for water droplets, salt and/or dust intake prevention and may be active at all times. The high rate fan may be used for obtaining a high rate ventilation flow above the minimum flow rate required for avoiding excessively high temperatures within the wind turbine and may thus be activated only when cooling is needed.

In some embodiments, the variable air flow generator may comprise an adjustable rate fan adapted to work at least at two predetermined speeds, e.g. a two-speed fan. The adjustable rate fan may work at a first speed that may be used for obtaining a pressurization level within the wind turbine above the minimum pressurization level required, and at a second speed that may be used for obtaining a high rate ventilation flow above the minimum flow rate required for avoiding excessively high temperatures within the wind turbine. In some embodiments, an adjustable rate fan may be used that is connected to a variable frequency drive. The variable rate fan may thus be adapted to work at many different speeds.

In a second aspect, the invention provides a method for controlling the ventilation and pressurization within a wind turbine. The method comprises generating an air flow which maintains a minimum pressurization level within the wind turbine generator, and when cooling is needed, increasing the air flow in order to protect the wind turbine generator against overheating and maintaining the pressurization level within a predetermined range of pressurization values.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 shows an air conditioning system for a wind turbine according to an embodiment of the present invention.
Figure 2 shows a chart of the air conditioning system according to an embodiment of the present invention representing pressurization level *versus* ventilation flow rate.

### DETAILED DESCRIPTION OF EMBODIMENTS

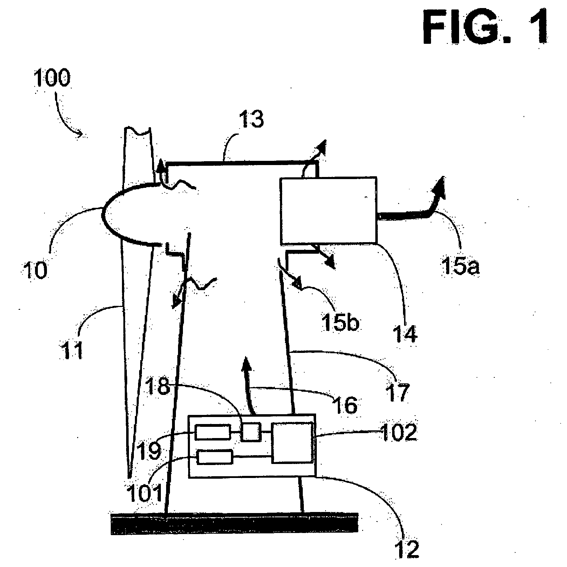

Figure 1 shows an air conditioning system for a wind turbine 100 according to an embodiment of the present invention. The wind turbine 100 of Figure 1 may comprise blades 11, a hub 10, a nacelle 13 and a tower 17. The air conditioning system that may be arranged in the wind turbine 100 of Figure 1 may comprise an adjustable air intake 12 and an adjustable air exhaust 14. The adjustable air intake 12 may comprise a variable air flow generator which may comprise a low rate fan 19 and a high rate fan 101. In other embodiments, the variable air flow generator may comprise an adjustable rate fan that may work at least at two different predetermined speeds. In yet further embodiments, the adjustable rate fan may be connected to a variable frequency drive.

Furthermore, the adjustable air intake 12 comprises an air treatment unit 102. The air treatment unit may comprise suitable filters and comprises a dehumidifier 18. The dehumidifier 18 may dehumidify the air flow which may be ducted to pass through the low rate fan 19, avoiding excessive humidity levels that could potentially damage wind turbine components. The low rate fan may be used at all times to maintain a minimum pressurization level in the wind turbine (e.g. an overpressure of 100 Pa).

When extra cooling is needed, the high rate fan may be activated and may supplement (or substitute the air flow of the low rate fan). The air flow generated by the high rate fan 101 may not necessarily be ducted to pass through the dehumidifier because humidity may not be a problem during overheating conditions. Also, it may be beneficial that the dehumidifier is not used in combination with the high rate fan, since a fan of lower performance may be used. In some embodiments, the dehumidifier 18 may not be comprised within the adjustable air intake 12. In some embodiments, the wind turbine may not comprise a dehumidifier, e.g. in implementations in dry environments.

The adjustable air intake in this case is depicted arranged within the tower. In some implementation, the air intake may be located elsewhere. In other implementations, a plurality of air intakes may be provided, e.g. one in the tower, and one in the nacelle.

The adjustable air exhaust 14 that may be arranged e.g. in the nacelle 13 of the wind turbine may comprise an overpressure damper which may open when a specific pressurization level is achieved.

The variable air flow generator that may be comprised within the air intake 12 may generate a variable air flow 16. Reference 15a represents the air exhaust through the adjustable air exhaust 14. Reference 15b represents the air exhaust through the housing joints of the wind turbine. Air exhaust through the housing joints may exist particularly at the joint of the tower with the nacelle (i.e. at the yaw system) and at the joint of the rotor (shaft) with the nacelle.

The low rate fan 19 may provide an air flow 16 that is sufficient to maintain the pressurization level within the wind turbine above the minimum pressurization level required. The variable air flow 16 may be increased to protect the wind turbine 100 against overheating when cooling is needed by activating the high rate fan 101. The adjustable air exhaust 14 may maintain the pressurization level within a reduced range of pressurization values. The overpressure damper that may be comprised in the adjustable air exhaust 14 may act as a "relief valve" that may remain closed until a certain pressure level is achieved. Once this certain pressure level is reached, the overpressure damper may open and thus prevent the housing pressure increase and so, maintain the pressurization level within a reduced range of pressurization values.

In some embodiments, the overpressure damper may be a non-return damper comprising a number of blades hingedly mounted in a frame. The opening of the damper may be automatic when a certain pressure is reached. The blades of the damper may be closed e.g. with a mechanism based on magnets. Once the pressure is sufficient to overcome the magnetic force keeping the blades closed, the damper may be opened.

In alternative embodiments, the mechanism keeping the blades closed until a certain minimum pressure may be based on the weight of the blades. Alternatively, the blades may be kept shut using springs. Also in these cases, whenever the pressure inside the turbine rises to a certain predetermined level, the air exhaust may automatically open. In these passive systems, no sensors and motor are needed. In general, this kind of passive system may be reliable.

In further embodiments, it may be possible to use sensors to measure the pressure within the wind turbine, in combination with a motor that opens the air exhaust when needed.

In yet further embodiments, a motor that is coupled to e.g. the high rate fan may be used. Whenever, cooling is needed, and the high rate fan is therefore activated, the motor may open the air exhaust to reduce the pressure level.

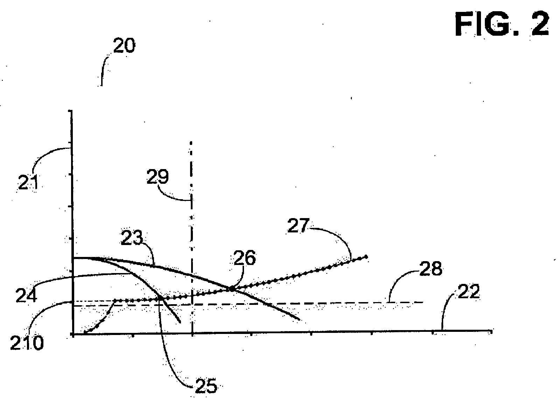

Figure 2, shows a chart 20 related to the air conditioning system for the wind turbine 100 according to an embodiment of the present invention described in Figure 1. The chart 20 may represent pressurization level *versus* ventilation flow rate. The pressurization level values are shown along the vertical axis 21 and the ventilation flow rate values are shown along the horizontal axis 22.

A minimum pressurization level that may be required within a conventional wind turbine may be represented by the limit 28. This pressurization level should be regarded as the pressurization level needed to avoid excessive inward flow of dust etc. The required pressurization level may e.g be an overpressure of approximately 100 Pa. A minimum flow rate that may be required during potential heating conditions within the wind turbine may be represented by the limit 29.

The air conditioning system according to an embodiment of the present invention may comprise a low rate fan 19 and a high rate fan 101 which may provide a characteristic curve 24 and 23, respectively. In this case, the curve 23 represents the combination of both the low and the high rate fan. The low rate fan 19 may generate a low rate ventilation flow working at low speed..The high rate fan 101 may generate an additional high rate ventilation flow working at high speed.

This air conditioning system may comprise an air exhaust 14 which may comprise an overpressure damper in which an opening pressure may be adjusted. The overpressure damper may remain closed until a specific pressurization level 210 may be achieved. If and when this level 210 is surpassed, the overpressure damper may open in order to avoid the further rising of the pressurization level within the wind turbine 100. The characteristic curve 27 of a housing with adjustable air exhaust is shown in Figure 2.

In the air conditioning system according to an embodiment of the present invention, the low rate fan 19 may be always activated maintaining a pressurization level within the wind turbine above the minimum pressurization level required 28, i.e. the working point 25 which may be the intersection between the housing with adjustable exhaust characteristic curve 27 and the characteristic curve 24 of the low rate fan 19 working at reduced speed.

The high rate fan 101 may be only activated when cooling may be needed (heating conditions). Once the high rate fan 101 is activated, the overpressure damper of the adjustable air exhaust may be opened at specific pressurization level 210 due to the pressure generated by the fan working at high speed. In preferred embodiments, the adjustable air exhaust may open automatically when a certain pressurization level is reached.

In consequence, , the minimum flow rate 29 for cooling may be reached without a significant increase of the pressurization level, i.e. the working point 26 which may be the intersection between the housing with adjustable exhaust characteristic curve 27 and the characteristic curve 23 of the high rate fan 101 working at high speed.

In some embodiments, an adjustable rate fan may be used. The adjustable rate fan may work at reduced speed in order to generate a low rate ventilation flow which may increase the pressurization level within the wind turbine 100 above the minimum pressurization level required 28. When heating up of components is a potential problem, the adjustable rate fan may work at maximum speed in order to generate a high rate ventilation flow which may increase the ventilation flow rate within the wind turbine 100 above the minimum flow rate limit 29 required for avoiding overheating in the wind turbine 100.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by the claims that follow.

## Claims

1. Air conditioning system for a wind turbine (100), comprising at least one adjustable air intake (12), an adjustable air exhaust (14), a dehumidifier (18) to dehumidify an air flow, and a variable air flow generator, wherein
said adjustable air exhaust (14) is adapted to maintain the pressurization level in the wind turbine (100) within a predetermined range **characterized in that**
the variable airflow generator comprises a low rate fan (19) and a high rate fan (101),
wherein the low rate fan (19) is connected to a dehumidifier (18) such that in use the air flow ducted to pass through the low rate fan is dehumidified, and the high rate fan (101) is arranged to supplement or substitute the air flow of the low rate fan (19), and is arranged such that
in use, an air flow of the high rate fan (101) is not dehumidified.

2. The air conditioning system according to claim 1, wherein the variable air flow generator is supplied by an air treatment unit (102).

3. The air conditioning system according to claim 1, wherein the at least one adjustable air intake (12) is arrangeable within the tower of the wind turbine (100).

4. The air condition system according to claim 1, wherein the adjustable air exhaust (14) comprises an overpressure damper which opens when a specific pressurization level is reached.

5. The air condition system according to claim 4, wherein the overpressure damper comprises at least one of the following mechanisms for keeping the overpressure damper closed until the specific pressurization level is reached:
- magnets;
- counterweights;
- springs; and/or
- a motorized device.

6. The air conditioning system according to any of claims 1 - 5, wherein the adjustable air exhaust (14) is arrangeable within the nacelle (13) of the wind turbine (100).

7. A method for ventilating and pressurizing a wind turbine (100) including an air flow generator comprising a high rate fan (101) and a low rate fan (19), **characterized in that** the method comprises:
generating an air flow by the low rate fan (19) which maintains a minimum pressurization level within the wind turbine (100) generator
dehumidifying the air flow of the low rate fan (19);
when cooling is needed, activating the high rate fan (101) to increase the air flow rate to supplement or substitute the air flow of the low rate fan in order to protect the wind turbine (100) generator against overheating; and
maintaining the pressurization level within a predetermined range of pressurization values, wherein
the air flow generated by the high rate fan is not dehumidified.

8. The method according to claim 7, wherein increasing the air flow includes adjusting an air intake (12).

9. The method according to any of claims 7 - 8, wherein maintaining the pressurization level within a predetermined range comprises adjusting an opening of an air exhaust (14) to the air flow rate.

## Patentansprüche

1. Klimaanlagesystem für eine Windenergieanlage (100), umfassend mindestens einen einstellbaren Lufteinlass (12), einen einstellbaren Abluftkanal (14), einen Luftentfeuchter (18) zur Entfeuchtung eines Luftstroms, und einen Generator variablen Luftstroms, wobei
der einstellbare Abluftkanal (14) angepasst ist, um das Druckbeaufschlagungsniveau in der Windenergieanlage (100) innerhalb eines vorherbestimmten Bereiches zu halten, **dadurch gekennzeichnet, dass**
der Generator variablen Luftstroms einen Lüfter geringen Volumenstroms (19) und einen Lüfter hohen Volumenstroms (101) umfasst,
wobei der Lüfter geringen Volumenstroms (19) mit einem Luftentfeuchter (18) verbunden ist, so dass der Luftstrom, der zum Durchgang durch den Lüfter geringen Volumenstroms zugeführt wird, im Betrieb entfeuchtet wird und der Lüfter hohen Volumenstroms (101) angeordnet ist, um den Luftstrom des Lüfters geringen Volumenstroms (19) zu ergänzen oder zu ersetzen und so angeordnet ist, dass
im Betrieb ein Luftstrom des Lüfters hohen Volumenstroms (101) nicht entfeuchtet wird.

2. Das Klimaanlagesystem nach Anspruch 1, wobei der Generator variablen Luftstroms von einer Luftaufbereitungseinheit (102) versorgt wird.

3. Das Klimaanlagesystem nach Anspruch 1, wobei der mindestens eine einstellbare Lufteinlass (12) innerhalb des Turmes der Windenergieanlage (100) angeordnet werden kann.

4. Das Klimaanlagesystem nach Anspruch 1, wobei der einstellbare Abluftkanal (14) eine Überdruckklappe umfasst, welche sich öffnet, wenn ein bestimmtes Druckbeaufschlagungsniveau erreicht wird.

5. Das Klimaanlagesystem nach Anspruch 4, wobei die Überdruckklappe mindestens eine der folgenden Vorrichtungen umfasst, um die Überdruckklappe geschlossen zu halten, bis das bestimmte Druckbeaufschlagungsniveau erreicht worden ist:
- Magneten;
- Ausgleichsgewichte;
- Feder; und/oder
- ein motorisiertes Gerät.

6. Das Klimaanlagesystem nach einem der Ansprüche 1 - 5, wobei der einstellbare Abluftkanal (14) innerhalb der Gondel (13) der Windenergieanlage (100) angeordnet werden kann.

7. Ein Verfahren zur Lüftung und Druckbeaufschlagung einer Windenergieanlage (100) umfassend einen Generator von Luftstrom umfassend einen Lüfter hohen Volumenstroms (101) und einen Lüfter geringen Volumenstroms (19), **dadurch gekennzeichnet, dass** das Verfahren folgendes umfasst:
das Erzeugen von einem Luftstrom durch den Lüfter geringen Volumenstroms (19), welcher ein minimales Druckbeaufschlagungsniveau innerhalb des Generators der Windenergieanlage (100) hält;
das Entfeuchten des Luftstroms des Lüfters geringen Volumenstroms (19);
wenn eine Abkühlung notwendig ist, das Aktivieren des Lüfters hohen Volumenstroms (101), um den Luftvolumenstrom zu erhöhen, um den Luftstrom des Lüfters geringen Volumenstroms zu ergänzen oder zu ersetzen, um den Generator der Windenergieanlage (100) vor einer Überhitzung zu schützen; und
das Halten des Druckbeaufschlagungsniveaus innerhalb eines vorherbestimmten Bereichs von Druckbeaufschlagungswerten, wobei
der durch den Lüfter hohen Volumenstroms erzeugte Luftstrom nicht entfeuchtet wird.

8. Das Verfahren nach Anspruch 7, wobei das Erhöhen des Luftstroms das Einstellen eines Lufteinlasses (12) umfasst.

9. Das Verfahren nach einem der Ansprüche 7 - 8, wobei das Halten des Druckbeaufschlagungsniveaus innerhalb eines vorherbestimmten Bereiches das Anpassen einer Öffnung eines Abluftkanals (14) an den Luftvolumenstrom umfasst.

## Revendications

1. Un système de conditionnement d'air pour une éolienne (100), comprenant au moins un conduit d'entrée d'air (12) ajustable, un conduit d'échappement d'air (14) ajustable, un déshumidificateur (18) destiné à déshumidifier un débit d'air, et un générateur de débit d'air variable, dans lequel
ledit conduit d'échappement d'air (14) est adapté pour maintenir le niveau de pressurisation dans l'éolienne (100) dans un intervalle prédéterminé, **caractérisé en ce que**
le générateur de débit d'air variable comprend un ventilateur à bas débit (19) et un ventilateur à haut débit (101),
dans lequel le ventilateur à bas débit (19) est connecté à un déshumidificateur (18) de façon que, lors de l'utilisation, le débit d'air conduit au travers du ventilateur à bas débit est déshumidifié, et le ventilateur à haut débit (101) est disposé de façon à compléter ou substituer le débit d'air du ventilateur à bas débit (19), et il est disposé de façon que,
lors de l'utilisation, un débit d'air du ventilateur à haut débit (101) n'est pas déshumidifié.

2. Le système de conditionnement d'air selon la revendication 1, dans lequel le générateur de débit d'air variable est fourni par une unité de traitement d'air (102).

3. Le système de conditionnement d'air selon la revendication 1, dans lequel au moins un conduit d'entrée d'air (12) ajustable peut être disposé dans la tour de l'éolienne (100).

4. Le système de conditionnement d'air selon la revendication 1, dans lequel le conduit d'échappement d'air (14) ajustable comprend un clapet de surpression qui s'ouvre lorsqu'un niveau de pressurisation spécifique est atteint.

5. Le système de conditionnement d'air selon la revendication 4, dans lequel le clapet de surpression comprend au moins un des suivants mécanismes pour maintenir le clapet de surpression fermé jusqu'à ce que le niveau de pressurisation spécifié soit atteint :
- des aimants ;
- des contrepoids ;
- des ressorts ; et/ou
- un dispositif motorisé.

6. Le système de conditionnement d'air selon l'une quelconque des revendications 1 - 5, dans lequel le conduit d'échappement d'air (14) ajustable peut être disposé dans la nacelle (13) de l'éolienne (100).

7. Un procédé pour ventiler et pressuriser une éolienne (100) incluant un générateur de débit d'air comprenant un ventilateur à haut débit (101) et un ventilateur à bas débit (19), **caractérisé en ce que** le procédé comprend :
générer un débit d'air moyennant le ventilateur à bas débit (19) qui maintient un niveau de pressurisation minimal dans le générateur de l'éolienne (100) ;
déshumidifier le débit d'air du ventilateur à bas débit (19) ;
lorsqu'un refroidissement est nécessaire, activer le ventilateur à haut débit (101) afin d'augmenter le débit d'air pour compléter ou substituer le débit d'air du ventilateur à bas débit afin de protéger le générateur de l'éolienne contre le suréchauffement ; et
maintenir le niveau de pressurisation dans un intervalle prédéterminé de valeurs de pressurisation, dans lequel
le débit d'air généré par le ventilateur à haut débit n'est pas déshumidifié.

8. Le procédé selon la revendication 7, dans lequel augmenter le débit d'air inclut ajuster un conduit d'entrée d'air (12).

9. Le procédé selon l'une quelconque des revendications 7 - 8, dans lequel maintenir le niveau de pressurisation dans un intervalle prédéterminé comprend adapter une ouverture d'un conduit d'échappement d'air (14) au débit d'air.
